# EUROPEAN PATENT APPLICATION

(11) **EP 1 161 093 A2**
(43) Date of publication of application: **05.12.2001**
(21) Application number: 01304703.0
(22) Date of filing: 29.05.2001
(51) Int. Cl.: H04N 7/16

(54) **Apparatus and method for mapping object data for efficient comparison operation between user preference information and content description information**

(30) Priority: 27.05.2000 KR 2000028884
(71) Applicant: LG ELECTRONICS INC., Seoul (KR)
(72) Inventor: Lee, Jin Soo, Songpa-Ku, Seoul (KR); Yoon, Kyoung Ro, Kangnam-Ku, Seoul (KR); Song, Jung Min, Seocho-Ku, Seoul (KR)
(74) Representative: McLeish, Nicholas Alistair Maxwell

(57) **Abstract**

In a user adaptive multimedia system reflecting user preference information extracted from user history information, an apparatus and a method for mapping object data for an efficient comparison operation between user preference information and content description information are capable of characteristically mapping and managing object data such as an actor's name, a director's name, a producer's name transformed and defined variously in accordance with a time and a place, an apparatus for mapping object data for an efficient comparison operation between user preference information and content description information includes a server (provider) system transmitting an object data expression information table defining expression information about object data having various expressions of the same content and information about multimedia program data to serviced to a user and a user (client) system mapping object data having various expressions by receiving content description information transmitted from the server system, namely, an object data expression information table and information about multimed a program data, performing a comparison operation between the received information and user preference information extracted from user history information about a prior multimedia program and outputting user preference information and reflecting the outputted user preference information to a multimedia system.

## Description

### BACKGROUND OF THE INVENTION

### 1 Field of the Invention

The present invention relates to a user adaptive multimedia system reflecting preference information of a user, and in particular to an apparatus and a method for mapping object data for an efficient comparison operation between user preference information and content description information which are capable of managing object data definable variously in accordance with a time and a place by mapping it characteristically.

### 2. Description of the Prior Art

According to popularization of a digital multimedia data system such as a digital broadcasting in providing of services related to the digital multimedia data system there nave been lots of attempts to provide a more convenient service to a certain user by reflecting preference of the certain user

In the U.S patent No.5861884, in providing a help to a user, a user adaptable interface can be provided to a user by using a user history about items frequently searched by the user. For example, when a help is constructed with a tree structure, it is possible to shorten a retrieval route to a user request help by adjusting content retrieved frequently by a user on a more superior level.

In embodiment of the above-mentioned service, user history information is mainly used for a method reflecting user preference, user preference information is extracted from the user history information, a multimedia retrieval and display method reflecting the user preference information has been introduced. As described above, the user history and the user preference information can be used in many fields for providing user adaptive services. Recently, in order to provide a more efficient user adaptive service, a "smart card" (i.e., a plastic card including an intergrated circuit for storing information) has been introduced and has replaced the conventional user basis service using a server or a device. The U S patent No 5814798 has introduced a method which is capable of providing a user basis service without being influenced by a server or a device by recording user preference information on a smart card

The multimedia retrieval and display method using user preference information and smart card in accordance with the prior art are mainly used for a video service such as a VOD (Video On Demand: a system providing a program to a viewer through an ISDN or a cable by compressing a video in user request), a PPV (Pay Per View Paying a rate in accordance with audit programs in a wire broadcasting service in the America), however a television broadcast soon will be the biggest application field according to a rapid development of a digital broadcast. For example, in a television broadcast, various services such as storing a user preference broadcast program automatically or making a program guide including a user preference program and information about a user preference time can be provided. In order to receive various services with a plurality of receiving apparatus and displaying apparatus commonly, the plurality of receiving and displaying apparatus have to own information jointly. Herein, in order to have the user preference information in common, the plurality of receiving and displaying apparatus can use a portable storing device such as a smart card, the plurality of receiving and displaying apparatus can receive various services by connecting to a service provider through a network by using the smart card.

However, in use of the portable storing device such as the smart card or in transferring of the user preference information through the network, a compatibility between a receiving apparatus and a displaying apparatus and a quantity of information to be transferred have to be considered. The compatibility problem can be solved through a standardization. But because user preference information extracted from user history information has to include more detailed information in order to provide more various services to a user, the quantity of information problem stid remains And, there is an efficiency problem in processing process for selecting a program to be serviced to a user after comparing user preference information from a client side (user) with content description information of a multimedia program from a provicer side (provider)

A user adaptive service of multimedia data requiring comparison between user preference information and content description information of a multimedia program is mainly divided into a user adaptive data filtering service which filters basic reference of user interest data when a push type multimedia data provider such as a broadcast unilaterally transmits various kinds of multimedia data in real-time, a user adaptive data retrieval service which receives automatically/semiautomatically only user interested data from a database including various kinds of multimedia data in a network when a user requests the interested data as an inquiry format to a pull type multimedia provider, and a custom-made summary service which provides only a user request part to a user by converting the user request part into abridged data temporally by selecting request data corresponding to a characteristic of a reproducing apparatus of a user and making a user watch the user request part when the user selects a certain multimedia data in order to make the user understand content.

For example, in the above-mentioned user adaptive service, when user preference information from a user and content description information of a multimedia program from a provider include information by actors/actresses, directors, producers, etc., in order to provide a program corresponded to the user preference information, the content description information is compared with the user preference information.

However, expressions in the content description information provided as a character format can differ in accordance with an information provider, the problem becomes intensified when user preference information is not limited to domestic programs but is extended to foreign programs. For example, user preference information can be described as character format and classify people into an actor/actress, a director, a producer, etc. or genres into a comedy, a horror, etc., and the same content can be repeated several times. In more detail, the same person can be an actor, a director or a producer. In addition, a preference of a user can be changed in accordance with a classification combination such as an actor/director/producer, etc., accordingly information of the same person can be repeated

In addition, in comparison of user preference information on the basis of a character format with content description information, a user side and a provider side can have different recognition reference about a similar word and a synonym, and expression about a place name, an adopted word, etc. can differ in accordance with each user in information recording/processing process. In addition, the same information having different expressions can be repeatedly shown in the content description information, in this case the processing process of character information has to perform the same operation several times.

Accordingly, lots of time requites in data processing and data can not be processed in certain case due to the above-mentioned problems.

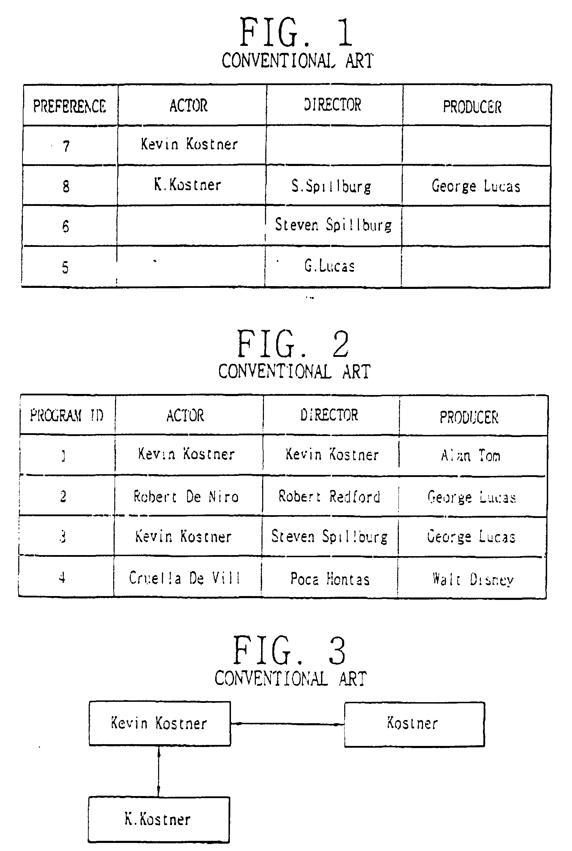

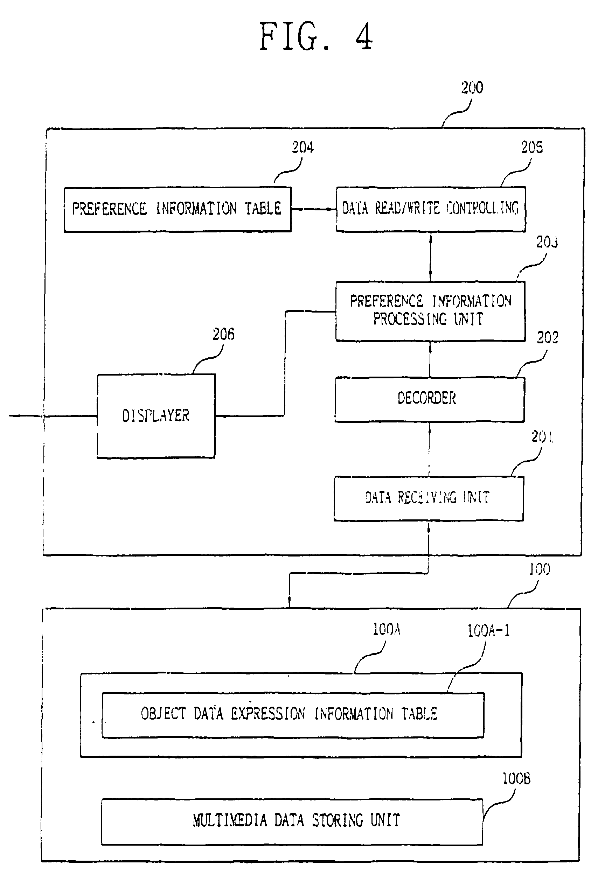

Figure 1 is a table illustrating an example of preference information extracted through user history information. As depicted in Figure 1, when a reference of Kevin Kostner as an actor is 7, a preference of a movie having a combination of Kevin Kostner as an actor, Steven Spillburg as a director, George Lucas as a producer is 8, Kevin Kostner can be expressed many ways such as "Mr. Kostner", "K.Kostner", "Kostner", etc. as well as Robert De Niro can be expressed many ways such as "Robert D Niro", "R De Niro", "De Niro", etc. Herein, Figure 2 is a table illustrating an example of content description information provided from a multimedia program service provider in accordance with the prior art, in selecting a user preference program with the content description information, when a user wants to select the preference 8 program having a combination of Kevin Kostner as an actor, Steven Spillburg as a director, George Lucas as a producer, a program ID 3 can be selected as a program corresponded to the preference 8 by a multimedia program service provider by recognizing expressions such as "K. Kostner", "Kevin Kostner" meant the same person as well as "S.Spillburg", "Steven Spillburg" meant the same person or assuming the expressions as the same person through a text processing process.

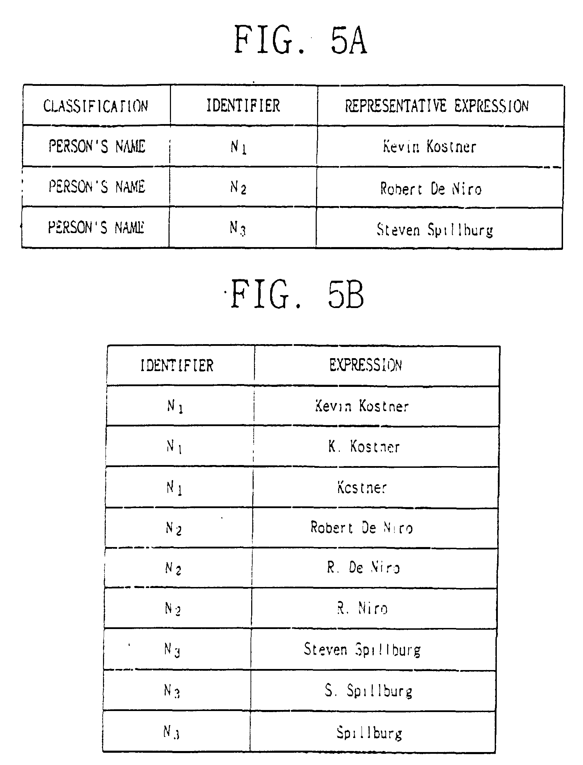

Figure 3 is a block diagram illustrating an example of different expressions having the same information stored in an object data expression information table in accordance with the present invention. As depicted in Figure 3, there can be many ways for expressing the same semantic information Accordingly, a multimedia program service provider has to be capable of processing different expressions having the same semantic information as the same information in order to compare preference information with content description information accurately.

In the meantime, when a person's name is expressed in various languages, diversity of expression increases in proportion to the number of languages. In addition, content description information can be repeatedly shown in one data, accordingly recognizing the same semantic information variously expressed as one information is very important.

### SUMMARY OF THE INVENTION

Accordingly, it is an object of the present invention to provide a method which is capable of characteristically mapping and managing object data definable variously in accordance with a time and a place by performing a comparison operation between user preference information data from a user side and content description information data from a service provider in a multimedia system reflecting preference information extracted from history information of a user

In addition, it is another object of'the present invention to provide a method which is capable of processing different expression as the same information through a comparison operation of user preference information data from a user side and content description information data from a service provider by forming the same information having several expression methods as one object data expression information table, defining an identifier by each information, and referencing an identifier in use of information pre-stored in the object data expression information table. Herein, the object data expression information table can be separately generated in a client (user) system or a plurality of server (provider) systems

In addition, it is still another object of the present invention to provide a method which is capable of recognizing several expressions as one object when the one object is expressed in several ways by referencing an identifier link Herein, although the several expressions have different identifiers and expressions, it is possible to recognize the several expressions as the same object by referencing identifier links and identifiers.

In order to achieve the above-mentioned objects. in a user adaptive multimedia system reflecting user preference information extracted from user history information, there is provided an apparatus for mapping object data in order to perform an efficient comparison operation of user preference information data from a user side and content description information data from a service provicer in accordance with the present invention including a server (provider) system transmitting an object data expression information table defining expression information about object data having various expressions of the same content and information about multimedia program data to serviced to a user, and a user (client) system mapping object data having various expressions by receiving content description information transmitted from the server system, namely, an object data expression information table and information about multimedia program data, performing a comparison operation between the received content description information with user preference information extracted from user history information about a prior multimedia program and outputting new user preference information, and reflecting the outputted user preference information to a multimedia system.

In addition, in order to achieve the above-mentioned objects, in a user adaptive multimedia system reflecting user preference information extracted from user history information, there is provided a method for mapping object data in order to perform an efficient comparison operation of user preference information with content description information in accordance with the present invention including transmitting an object data expression information table defining expression information about object data having various expressions of the same content and information about a multimedia program data to be serviced to a user, and mapping object data having various expressions by receiving the transmitted content description information, namely, object data expression information table and information about multimedia program data and performing a comparison operation between the received content description information and user preference information extracted from user history information about a prior multimedia program and outputting user preference information, and reflecting the outputted user preference information to a multimedia system.

### BRIEF DESCRIPTION OF THE DRAWINGS

Figure 1 is a table illustrating an example of user preference information extracted from user history information in accordance with the prior art;
Figure 2 is a table illustrating an example of content description information provided from a multimedia program service provider in accordance with the prior art;
Figure 3 is a block diagram illustrating an example of various expressions about the same information stored in an object data expression information table in accordance with the present invention;
Figure 4 is a block diagram illustrating a user adaptive multimedia system reflecting user preference information in accordance with the present invention,
Figure 5A is a table illustrating an example of an object data expression information table having representative expressions in accordance with the present invention,
Figure 5B is a table illustrating an example of an object data expression information table having different expressions about one identifier in accordance with the present invention;
Figure 6A is a table illustrating an examole of an object data expression information table having link information about identifiers in accordance with the present invention;
Figure 6B is a block diagram illustrating an example of an object data expression information table by a UML method in accordance with the present invention,
Figure 7A and 7B are tables illustrating identifiers for expressing one or not less than one object data having the same content and various expressions by the identifiers when a user side and a service provider side do not own the same information expression table jointly;
Figure 8 is a table illustrating identifiers and representative expressions by the identifiers by a service provider side when a user side and a service provider side do not own the same information expression table jointly; and
Figure 9 is a flow chart illustrating a service method of a multimedia system in accordance with the present invention.

### DETAILED DESCRIPTION OF THE PREFERRED EMBODIMENT

Figure 4 is a block diagram illustrating a user adaptive multimedia system reflecting user preference information.

As depicted in Figure 4, a user adaptive multimedia service system reflecting user preference information includes a content description information storing unit 100A having an object data expression information table 100A-1 defining and registering expression information about object data having various expressions of the same content, a multimedia data storing unit 100B having a program data stream to be serviced to a user, a data receiving unit 201 receiving the object data expression information table 100A-1 transmitted from the server (provider) system 100 (i.e., the content description information storing unit 100A and the multimedia data storing unit 100B belong to the server (provider) system 100) and data stream of the multimedia data storing unit 100B and outputting data, a decoder 202 being inputted the data outputted from the data receiving unit 201, decoding and outputting the data, a preference information table 204 storing user preference information extracted from user history information about a prior multimedia program as a table format, a data read/write controlling unit 205 reading and writing data of the preference information table 204, a preference information processing unit 203 mapping object data having various expressions by performing a comparison operation between the data decoded in the decoder 202, namely, the data of the content description information storing unit 100A and the preference information data of the preference information table 204 and outputting a result, and reflecting the user preference information (the result) to the multimedia system, and a displayer 206 being inputted the user preference information from the preference information processing unit 203 and outputting the user preference information to an outputting apparatus

The operation and effect of the user adaptive multimedia service system reflecting user preference information in accordance with the present invention will now be described with reference to accompanying drawings.

The server (provider) system 100 includes the content description information storing unit 100A having the object data expression information table 100A-1 having identifiers and expression information about the identifiers for expressing hot less than one object data of the same content, and the multimedia data storing unit 100B having content data stream of a multimedia program to be serviced to a user. The server (provider) system 100 transmits not only data stream of the multimedia data storing unit 100B but also content description information of the content description information storing unit 100A, namely, the object data expression information table to the data receiving unit 201 of the client (user) system 200 After that, the data receiving unit 201 of the client (user) system 200 receives the object data expression information table 100A-1 transmitted from the server (provider) system 100 and the data stream of the multimedia data storing unit 100B and outputs each data of the apparatus. After that, the decoder 202 is inputted the data outputted from the data receiving unit 201, decodes and outputs it. The preference information processing unit 203 reads the data of the preference information table 204 having the user preference information extracted from the user history information about a prior multimedia program from the data read/write controlling unit 205, performs a comparison operation between the data of the preference information table and the decoded data in the decoder 202, namely, the data of the content description information storing unit 100A, and outputs a result. As described above, the preference information processing unit 203 reflects the user preference information to the multimedia system by mapping the object data having various expressions. After that, the displayer 206 is inputted the result outputted from the preference information processing unit 203 and outputs the result to the outputting apparatus Herein, a medium servicing multimedia data to a user through the displayer 206 can be a CATV, a TV, a VOD, a digital broadcast, an Internet retrieval site, etc.

It snould be understood tnat the above-described embodiment are not limited by any of the details of the foregoing description, unless otherwise specified, but rather should be constructed broadly within its sprit and scope as defined in the appended claims, and therefore all changes and modifications that fall within the meets and bounds of the claims, or equivalence of such meets and bounds are therefore intended to be embraced by the appended claims.

As described in the prior art, all the user adaptive multimedia service reflecting user preference depend on a result of a comparison operation between user preference information and content description information of multimedia data

However, in a comparison operation between preference information with content description information on the text basis, it is difficult to perform an accurate recording/processing because there is a similar word and a synonym processing problem and a name such as a person, a place, a word of foreign origin may be differently recorded in accordance with each user. In addition, the same information (preferred person/preferred place or concept) may be repeatedly included in preference information or content description information, in the case the same operation can be performed repeatedly in order to process text information.

Accordingly, in order to solve above-mentioned problems, as depicted in Figure 4, the server (provider) system 100 can perform a comparison operation between user preference information and content description information by providing the object data expression information table 100A-1 having identifiers expressing one or not less than one object data of the same content and expression information by the identifiers to the client (user) system 200, and simply referencing the identifiers when information registered in the object data expression information table 100A-1 is used in the user preference information or the content description information. Herein. the table information can be generated in the client (user) system 200 and can be provided to the server (provider) system 100.

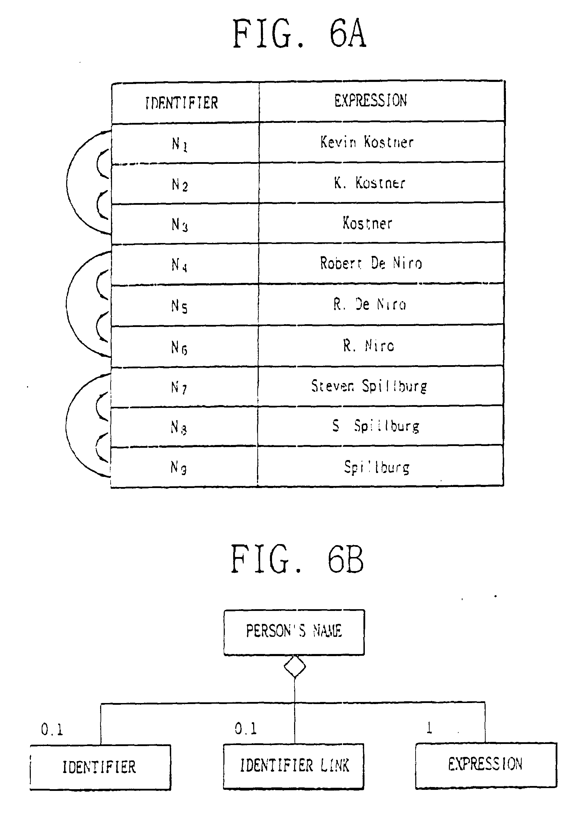

Figures 5A, 5B, 6A and 6B are tables illustrating examples of object data expression information table having identifiers and expression information by the identifiers.

Figure 5A is a table illustrating an example of an object data expression information table having representative expressions

In Figure 5A, when various expressions of the same object are possible identifiers and representative expressions are defined by each information. Figure 5B is a table illustrating an example of an object data expression information table having various expressions about one identifier, capable expressions are registered by each object, information to be expressed is displayed by checking the registered expressions and combining by identifiers or representative expressions in constructing of user preference information or in constructing of content description information. In more detail, by using a table including object data having different expressions, although various expressions about the same object are expressed in content information, the object can be identified through the identifier and a pertinent object can be consistently displayed by using an object data expression information table As described above, in accordance with a content description information generator, even content description information described with various expressions about the same object can be expressed as one identifier by comparing the content description information with capable expressions defined in the object data expression information table.

Accordingly, because user preference information provided through various content description information has one identifier per one object, the processing process can be more simplified only by comparing identifiers.

Figure 6A is a table illustrating an example of an object data expression information table having link information about identifiers in accordance with the present invention Figure 6B is a block diagram illustrating an example of an object data expression information table by a UML method in accordance with the present invention. Figures 6A and 6B are another expression structures having the same effect as Figures 5A and 5B. When there are various expressions about the same object, the object data expression information table includes an identifier link in order to identify the various expressions as the one object. In more detail, although there is information having different identifiers and different expressions, expressions or identifiers corresponded to one identifier link describe the same object.

In comparing of the same information between user preference information and content description information, when a user side (user preference information) and a service provider (content description information) own the same information expression table jointly, the both sides can easily perform a comparison operation by using only identifiers.

However, when a user side (user preference information) and a service provider (content description information) do not own the same information expression table jointly (i.e., a user side apparatus automatically or semiautomatically generates user preference information, and one or a plurality of third information providers provide content description information), it is possible to perform a quick comparison operation by below two methods modified from the methods as shown in Figures 5A ~ 6B

In a first method, a content description provider side provides an object data expression information table of a user side, the user side compares its information expression table with the provided object data expression table, and updates the object data expression table. Herein, the content description information provider side periodically or nonperiodically provides the updated object data expression table to the user side, the provided object data expression table is divided into two types in accordance with its content.

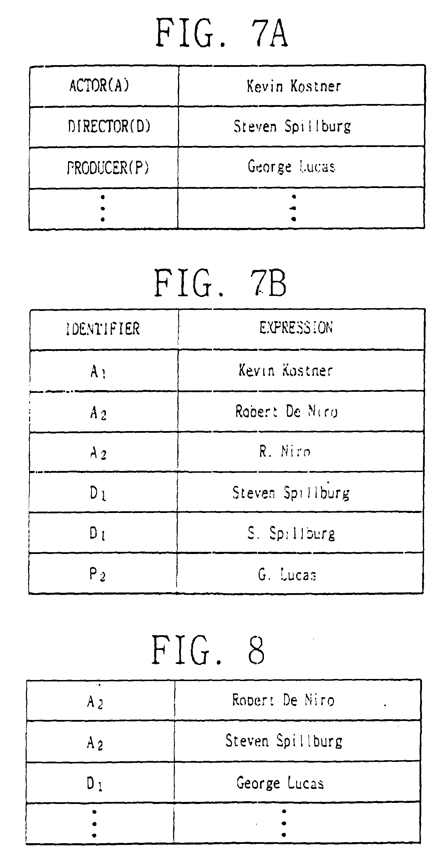

Figures 7A and 7B are tables illustrating a first type When a user preference information constructor side and a content description information constructor side do not own the same information expression table jointly, a table includes identifiers for expressing one or not less than one object data having the same content and various expressions according to the identifiers. Herein, Figure 7A is a table illustrating direct information (for example, an actor's name, a director's name, a producer's name, etc.) as content description information, Figure 7B is a table illustrating identifiers and various expressions of a pertinent object as the content description information. The user side updates its information expression table by comparing/combining its information expression table with a table having the direct information or having identifiers for expressing one object data or not less than one object data of the same content and various expressions in accordance with the identifiers.

Figure 8 is a table illustrating a second type. When the user preference information constructor and the content description information constructor do not own the same information expression table jointly, the content description information constructor side has a table illustrating identifiers and representative expressions according to the identifiers.

As depicted in Figure 8, the content information provider provides an information expression table including identifiers and representative expressions according to the identifiers to the user side. In comparing of the provided information expression table with item contents of its information expression table, the user side performs mapping (i.e., matching an identifier used in the user preference information with an identifier of the same information used in the content description information provided from the information provider) item of the user side information expression table having the same content as a pertinent each identifier Through the mapping process, the user side continually updates its information expression table

As described above, by mapping the identifiers by information providers and recognizing a pertinent identifier of information expression included in the content description information, comparing of the user preference and content description information can be simplified, and by storing various expressions by identifiers, a quantity of information can decrease.

When the user preference information constructor and the content description information constructor do not own the same information expression table jointly, in other words, when the content description information provider does not include an information expression table, content description information including direct-described information is provided without providing an information expression table when one or a plurality of content description information provider provides information to a user. When the user constructs its information expression table by using the information of the content description information, a look-up table method is used, preference information is compared with content description information or when content description information is received it is converted into identifiers, a processing time required for comparison operation decreases and a quantity of data to be stored decreases by comparing the converted identifiers with identifiers included in the user preference information.

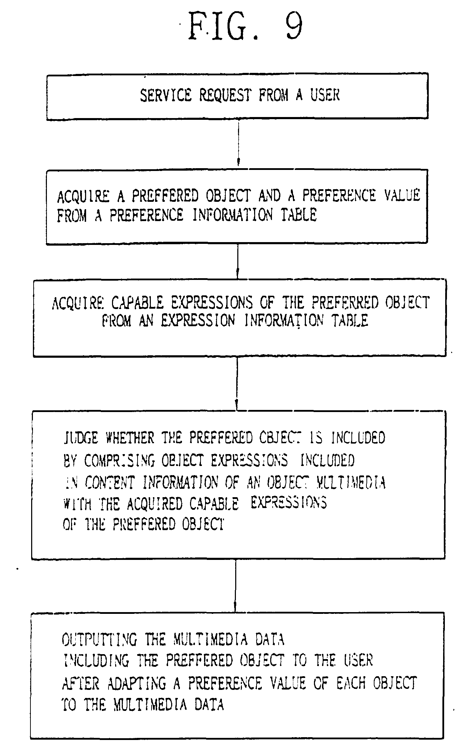

Figure 9 is a flow chart illustrating a service method of a multimedia system in accordance with the present invention.

First, when a user requests a multimedia service reflecting user preference a client (user side) system reads an object as a subject of each preference and a pertinent preference value from a user preference information storing unit in order to acquire user preference. In order to reflect the acquired preference information, in comparing whether preferred objects are included in each content description information of multimedia data, the same object which is variously described can be judged by finding capable expression information corresponded to each identifier described in preference information description structure from an object data expression information table and comparing the found expression information with object expression information included in multimedia data content information. Accordingly, by the above-described process, multimedia data judged as the preferred object included in each content description information can be selected and can be serviced to a user by applying a preference value.

Accordingly, in a user adaptable multimedia service, reflecting a user preference, an object data mapping apparatus and method for efficient comparison operation in accordance with the present invention is capable of acquiring efficiently user preference information from various data.

In addition, in th.e user adaptable multimedia service reflecting a user preference, the object data mapping apparatus and method for efficient comparison operation in accordance with the present invention is capable of processing all data irrelevant to a server by solving a linguistic aspect of content description information described as different language of each country and an expression diversity problem expressed variously according to a generator of the content description information.

In addition, in the user adaptable multimedia service reflecting a user preference, the object data mapping apparatus and method for efficient comparison operation in accordance with the present invention is capable of being adapted variously not only to a multimedia service reflecting a user preference but also a region dealing data including content description information irrelevant to a server such as an Internet service, etc. by partially solving a problem according to a mutual information interpretation between data.

## Claims

1. In a user adaptable multimedia system reflecting user preference information extracted from user history information, an apparatus for mapping object data for an efficient comparison operation between user preference information and content description information, comprising:
a server (provider) system transmitting an object data expression information table defining expression information about object data having various expressions of the same content and information about multimedia program data to serviced to a user; and
a user (client) system mapping object data having various expressions by receiving content description information transmitted from the server system, namely, an object data expression information table and information about multimedia program data, performing a comparison operation between the received content description information with user preference information extracted from user history information about a prior multimedia program and getting user preference of contents described in the received content description information, and reflecting the gotten user preference information to a multimedia system.

2. The apparatus of claim 1, wherein the object data expression information table includes one identifier for expressing one object data and not less than one object data different each other.

3. The apparatus of claim 1, wherein the object data expression information table includes one identifier for expressing not less than one object data of the same content and not less than one object data different each other.

4. The apparatus of claim 1, wherein the object data expression information table includes one identifier for expressing not less than one object data of the same content, and an identifier link for identifying object data which is variously expressed as one object of the same content when one object data is variously expressed.

5. The apparatus of claim 1, wherein the server (provider) system and the client (user) system jointly own the object data expression information table or the server (provider) system generates the object data expression information table and provides it to the client (user) system or the server (provider) system generates the object data expression information table and stores it in a preference information table of the client (user) system as a lookup table format.

6. In an apparatus for mapping object data for an efficient comparison operation between user preference information and content description information, a server (provider) system, comprising:
a content description information storing unit including an object data expression information table defining various expressions of object data having various expressions of the same content; and
a multimedia data storing unit including data streams of a program to be serviced to a user.

7. In an apparatus for mapping object data for an efficient comparison operation between user preference information and content description information, a client (user) system, comprising:
a data receiving unit for receiving an object data expression information table transmitted from a server (provider) system, data streams from a multimedia data storing unit, and outputting the data;
a decoder being inputted the data outputted from the data receiving unit, decoding and outputting it;
a preference information table storing user preference information extracted from user history information about a prior multimedia program as a table format:
a data read/write controlling unit for reading and writing data of the preference information table,
a preference information processing unit for mapping object data having various expressions by performing a comparison operation between data decoded in the decoder, namely, data in the content description information storing unit of the server (provider) system and the preference information data of the preference information table and outputting new user preference information, and reflecting the outputted user preference information to a multimedia system; and
a displayer being inputted the user preference information outputted from the preference information processing unit and outputting it through an outputting medium.

8. The apparatus of claim 7, wherein the outputting medium includes a CATV, a TV, a VOD, a digital broadcast, an Internet broadcast, an Internet retrieval site

9. A method for mapping object data for an efficient comparison operation between user preference information and content description information, wherein a server system and a client system can perform mapping of same object data by jointly owning an object data expression table and comparing identifiers included in the object data expression table.

10. A method for mapping object data for an efficient comparison operation between user preference information and content description information, comprising:
providing a table including identifiers about various object data and information about various expressions of object data included in content description information of multimedia data provided from a server to a client by constructing an object data expression information table and comparing object data of the object data expression information table with object data of a preference information table in updating of preference information, and
updating a preference information table of the client by comparing and compounding the provided table with a preference information table of a client.

11. In a user adaptable multimedia system reflecting user preference information extracted from user history information, a method for mapping object data for an efficient comparison operation between user preference information and content description information, comprising:
transmitting an object data expression information table defining expression information about object data having various expressions of the same content and information about a multimedia program data to be serviced to a user; and
mapping object data having various expressions by receiving the transmitted content description information, namely, object data expression information table and information about multimedia program data and performing a comparison operation between the received content description information and user preference information extracted from user history information about a prior multimedia program and getting user preference of contents described in the received content description information, and reflecting the gotten user preference information to a multimedia system.

12. In a server (provider) system, a method for mapping object data for an efficient comparison operation between user preference information and content description information, comprising:
storing an object data expression information table after defining the object data expression information table including various expressions of object data naving various expressions of the same content; and
storing data streams of a program to be serviced to a user.

13. The method of claim 12, wherein the storing process for storing the object data expression information table after defining it comprises the steps of:
defining one identifier for expressing one object data and storing the defined identifier in a table; and
generating not less than one different object data and storing the not less than one different object data in a table.

14. The method of claim 12, wherein the storing process for storing the object data expression information table after defining it comprises the steps of:
defining one identifier for expressing not less than one object data of the same content and storing the one identifier in a table, and
generating not less than one different object data and storing the not less than one different object data in a table.

15. The method of claim 12, wherein the storing process for storing the object data expression information table after defining it comprises the steps of:
defining one identifier for expressing not less than one object data of the same content and storing the one identifier in a table, and
defining an identifier link for identifying various object data as one object of the same content when one object data is variously expressed.

16. In a client (user) system, a method for mapping object data for an efficient comparison operation between user preference information and content description information, comprising:
receiving an object data expression information table transmitted from a server (provider) system and data streams from a multimedia data storing unit and outputting the received data;
decoding the data after being inputted the outputted data;
storing user preference information extracted from user history information about a prior multimedia program as a table format;
performing a comparison operation between the decoded data and preference information data; and
outputting a result of the comparison operation in order to reflect the result to a multimedia system.

17. A method for mapping object data for an efficient comparison operation between user preference information and content description information. comprising;
providing an object data expression information table from a content description information constructor to a preference information constructor when the preference information constructor and the content description information constructor do not own jointly an object data expression information table of the same content in comparing and updating of content information between the preference information constructor and content description information constructor; and
updating preference information table of the preference information constructor by using information of the provided object data expression information table after comparing preference information table of the preference information constructor with the provided object data expression information table.

18. The method of claim 17, wnerein me updating process comprises the steps of:
generating direct information such as an actor's name, a director's name, a producer's name or a table including identifiers for expressing one or not less than one object data of the same content and various expressions by the identifiers by the content description information constructor,
providing the direct information or the table generated from the content description information constructor to the preference information constructor; and
updating a preference information table by the preference information constructor by comparing the direct information or the table provided from the content description information constructor with a preference information table of the preference information constructor.

19. The method of claim 17, wherein the updating process comprises the steps of:
generating a table including ident fiers for expressing one or not less than ore object data of the same content and representative expressions by the identifiers by the content description information constructor,
providing the table generated by the content description information constructor to the preference information constructor; and
updating the preference information table by mapping an item of the preference information table same as the each identifier corresponded to a representative expression of the table provided from the content description information constructor by the preference information constructor.

20. A method for mapping object data for an efficient comparison operation between user preference information and content description information, comprising
providing direct information stored in a content description information constructor to a preference information constructor as a lookup table format when the preference information constructor and the content description information constructor do not jointly own an object data expression information table of the same content in comparing and updating of content information between the preference information constructor and the content description information constructor;
transforming the direct information of the lookup table into identifiers in comparing of content information between the preference information constructor and the content description information constructor; and
updating preference information table by the preference information constructor after comparing identifiers stored in the preference information table with the transformed identifiers.

21. In a user adaptive multimedia system, a multimedia service method, comprising:
requesting a multimedia service reflecting user preference to a multimedia data provider by a client;
acquiring each identifier of objects used as a preference reference and a corresponding preference value from a preference information table of a user by a user (client) system;
retrieving multimedia data by finding capable expression information corresponded to each identifier described in preference information from the preference information table and comparing the found expression information with object expression information included in multimedia content information provided from a multimedia provider in order to retrieve multimedia data including an object corresponded to each identifier; and
outputting the retrieved multimedia data to the user after reflecting the acquired preference value.
